# EUROPEAN PATENT APPLICATION

(11) **EP 1 608 155 A2**
(43) Date of publication of application: **21.12.2005**
(21) Application number: 05253686.9
(22) Date of filing: 14.06.2005
(51) Int. Cl.: H04N 5/232

(54) **Image pickup apparatus having a display panel and an image pickup method**

(30) Priority: 16.06.2004 JP 2004178757
(71) Applicant: SONY CORPORATION, Tokyo (JP)
(72) Inventor: Imai, Kenichiro c/o Sony Corporation, Tokyo (JP)
(74) Representative: Mills, Julia

(57) **Abstract**

An image pick up apparatus having a freely openable and closable panel display that includes a first operation unit provided on a body side of the image pick up apparatus and
a second operation unit provided at the panel display, wherein the first operation unit and the second operation unit have an equivalent operation function.

## Description

The present invention contains subject matter related to Japanese Patent Application JP2004-178757, filed in the Japanese Patent Office on June 16, 2004, the entire contents of which being incorporated herein by reference.

The present invention relates to the field of image pickup apparatus and methods. More specifically, the present invention relates to image pickup apparatus having a display panel and an image pickup method. Illustrative embodiments of the invention relate to an image pickup apparatus having a freely openable and closable panel display, in which a first operation unit is provided on a body side of the image pickup apparatus and a second operation unit is provided at the panel display, with operativity being improved by giving the first operation unit and the second operation unit equal functionality.

In the related art, image pickup apparatus where moving image photographing and still image photographing can be easily enjoyed have become widespread. Such image pickup apparatus are provided with a zoom function and images can therefore easily be taken of a subject at a desired size using this zoom function. A zoom function enables the focal length of an image pickup lens to be continuously changed from a wide angle range to a telephoto range without changing the lens by utilizing rotation of a motor so as to move a plurality of groups of image pickup lenses in the direction of an optical axis while maintaining a prescribed optical relationship. For example, with a camera with a zoom device of patent document (Japanese Patent Publication No. 2652891.), a TW zoom operation unit and a TW direct operation unit are provided. A zoom operation is then carried out when the TW zoom operation unit is operated, and it is then possible to move the image pickup lens directly to the telephoto end and wide end when the TW direct operation unit is operated.

Further, when still image photographing is carried out, as with a still camera etc., when a shutter operation unit is pressed half-way down, it is possible to adjust camera setting parameters such as focus and exposure etc. automatically. When the shutter operation unit is then pressed down all the way, the camera setting parameters are fixed and it is possible to take still images.

Here, the zoom operation unit operated while using the zoom function and the shutter operation unit operated while taking still images are provided at positions that enable operation by the thumb and forefinger etc. of a supporting hand so as to enable straightforward operation when the image pickup apparatus is supported using one hand. However, there are various kinds of users of the image pickup apparatus such as, for example, people with large hands or people with small hands. There may therefore be cases where the zoom operation unit and the shutter operation unit may not be in positions where operation is straightforward. Further, in the case of a design where the image pickup apparatus is held in the right hand, operation of the zoom operation unit and shutter operation unit is difficult for people whose dominant hand is their left hand.

This invention therefore seeks to provide an image pickup apparatus whose operativity is improved.

One aspect of the present invention provides an image pickup apparatus having a freely openable and closable panel display, provided with a first operation unit on a body-side of the image pickup apparatus and a second operation unit at the panel display, with an equivalent operation functions being provided at the first operation unit and the second operation unit.
In preferred embodiments as the equivalent operation functions, a zoom operation function and a shutter operation function for taking still images are set.

According to embodiments of this invention, a first operation unit is provided at the body-side of the image pickup apparatus, and a second operation unit is provided at the panel display, with the first operation unit and the second operation unit being given the equivalent operation functions. Further, as the equivalent operation functions, a zoom operation function and a shutter operation function for taking still images are set. As a result, in the event, for example, that it is not possible to easily operate the first operation unit with the right hand with the image pickup apparatus supported in the right hand, it is possible to perform the zoom operation and shutter operation by operating the second operation unit with the left hand, so as to improve operability of the image pickup apparatus.
A further aspect of the present invention provides an image pickup up method according to claim 4.
The present invention will be described further, by way of example only, with reference to preferred embodiments thereof as illustrated in the accompanying drawings, in which:
FIG. 1 is a view showing the external appearance of an image pickup apparatus;
FIG. 2 is a view showing an outline of an internal configuration for an image pickup apparatus;
FIG. 3 is a flowchart showing a zoom operation; and
FIG. 4 is a flowchart showing an operation for taking a still image.

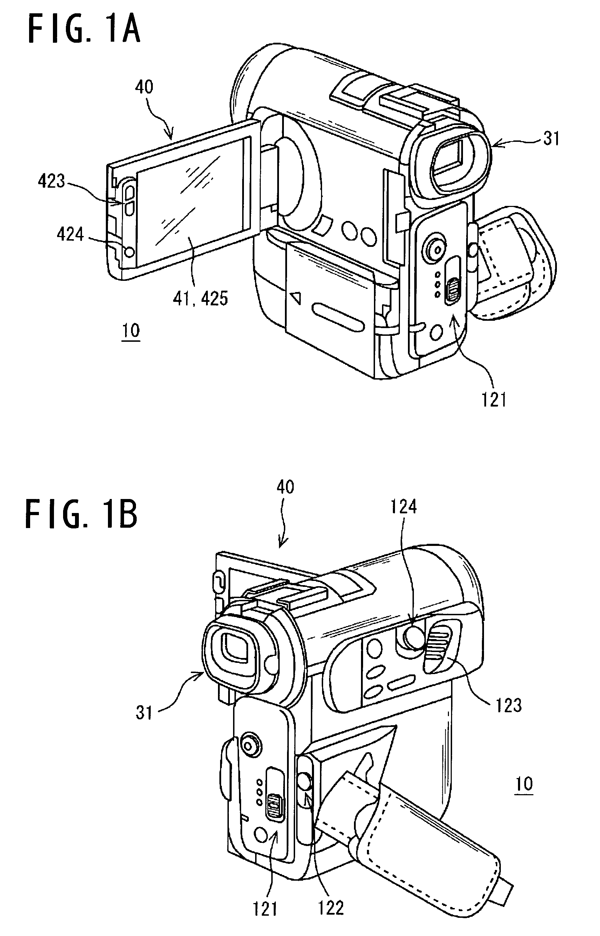

The following is a description with reference to the drawings of an embodiment of the invention. FIG. 1 shows the external appearance of an image pickup apparatus 10, with FIG. 1A showing the case where the image pickup apparatus 10 is looked down on from the rear left side, and FIG. 1B showing the case where the image pickup apparatus 10 is looked down on from the rear right side.

A power switch 121 for starting or ending operation of the image pickup apparatus 10 is provided at the rear surface side of the body of the image pickup apparatus 10. Further, at the power switch 121, it is possible to switch over between operating modes of a moving image mode for recording moving images, a still image mode for recording still images, and a playback mode for playing back recorded moving images or still images, etc.

A recording start/stop switch 122 for starting or stopping moving image recording operations is provided at the rear end of the right side surface of the body of the image pickup apparatus 10. A body side zoom operation unit 123 and body side shutter operation unit 124 operated when recording still images are provided at the front side of the right side surface of the body of the image pickup apparatus 10.

An electronic viewfinder (hereinafter referred to as "EVF") 31 is provided at the upper part of the body of the image pickup apparatus 10. A panel display 40 is provided in freely openable and closable manner at the left side surface of the body. The panel display 40 is constructed using a flat display 41, for example, liquid crystal display elements etc. Further, a panel-side zoom operation unit 423 is provided at an outer frame portion on the opposite side to a support side, with a panel-side shutter operation unit 424 being provided at the lower side of the panel-side zoom operation unit 423.

When the power switch 121 is set to the moving image mode, the image pickup apparatus 10 starts a moving image recording operation for a subject when the image recording start/stop switch 122 is pressed, and ends the moving image recording operation when the image recording start/stop switch 122 is pressed again. Images captured are then displayed at the EVF 31 and/or the panel display 40. For example, captured images are displayed at the EVF 31 when the panel display 40 is closed. Further, when the panel display 40 is open as shown in FIG. 1, captured images are displayed at the flat display 41 of the panel display 40. Captured images may also be displayed at the EVF 31 when the panel display 40 is open.

When the body-side shutter operation unit 124 or the panel-side shutter operation unit 424 is pressed down half-way with the power switch 121 set to the still image mode, focus and exposure etc. is automatically adjusted. A still image is then recorded for a subject at the time that the body-side shutter operation unit 124 or the panel-side shutter operation unit 424 is pressed all the way down.

When an operation designating the playback mode is carried out with the power switch 121 set to the playback mode, playback of moving images and still images is carried out according to the designated playback mode. For example, a touch panel switch 425 is provided on the screen of the flat panel display 41. When the power switch 121 is set to the playback mode, a playback menu is displayed at the panel display 40. When an operation designating one of the playback modes carried out from the menu displayed is indicated as an operation signal from the touch panel switch 425, playback of moving images and still images is carried out as this designated playback mode.

In the case where taken images are displayed at the EVF 31 or the panel display 40 with the power switch 121 set to moving image mode or still image mode, if the body-side zoom operation unit 123 or a wide switch WZ-P of the panel-side zoom operation unit 423 is operated, the image pickup lens is driven so that the angle of view of an image being taken is broadened. Further, if the body-side zoom operation unit 123 or a tele switch TZ-P of the panel-side zoom operation unit 423 are operated, the image pickup lens is moved so that the subject display is enlarged.

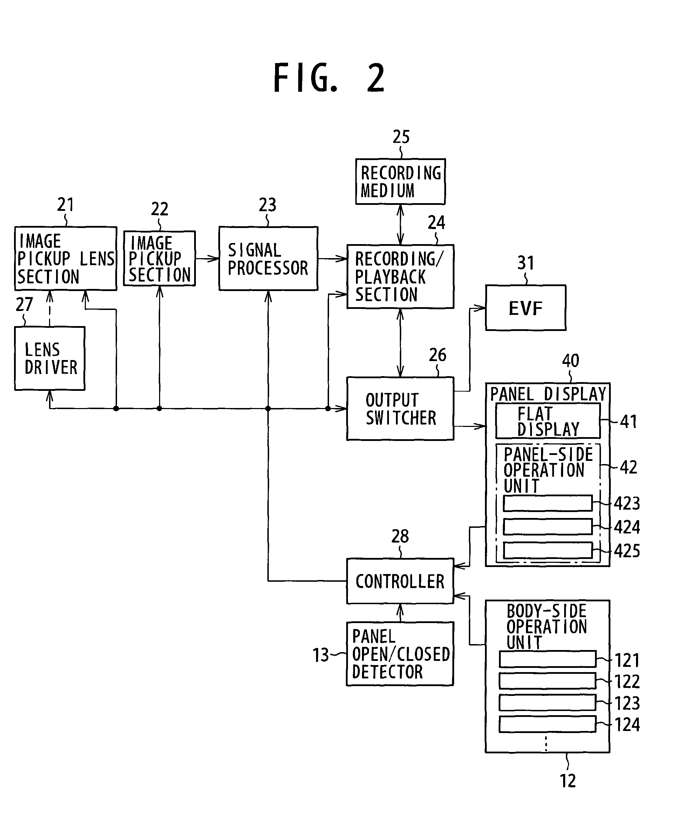

FIG. 2 shows an outline of an internal configuration for the image pickup apparatus 10. A subject image is then formed by an image pickup lens section 21 at an image pickup surface of an image pickup section 22. The image pickup lens section 21 is driven by a lens driver 27 and controller 28 described later. The image pickup section 22 converts the subject image to an electrical signal, and outputs to a signal processor 23. The signal processor 23 processes the signal supplied by the image pickup section 22, and outputs to a recording/playback section 24. The recording/playback section 24 records an image signal provided by the signal processor 23 on a recording medium 25. Sound is collected by a microphone (not shown) and an audio signal obtained by the microphone is inputted to the recording/playback section 24 and is recorded together with the image signal by the recording/playback section 24 on the recording medium 25. Magnetic tape, an optical disc, or a semiconductor memory etc. may be used as the recording medium 25. Moving images and still images may be recorded on the same recording medium or on different recording mediums.

The recording/playback section 24 then provides an image signal provided by the signal processor 23 or an image signal read out from the recording medium 25 to an output switcher 26. The output switcher 26 supplies the image signal provided by the recording/playback section 24 to the EVF 31 or the flat display 41 of the panel display 40. The EVF 31 or the flat display 41 of the panel display 40 displays images being taken or moving images and still images recorded on the recording medium, based on an image signal provided via the output switcher 26. Further, the lens driver 27 drives the image pickup lens section 21 so as to perform a zoom operation that changes magnification without changing a position of imagery of a subject.

A body-side operation unit 12 is comprised of the power switch 121, an image recording start/stop switch 122, a body side zoom operation unit 123 and a body side shutter operation unit 124 and generates operation signals according to each switch operation and provides them to the controller 28. Further, a panel-side operation unit 42 is comprised of the panel-side zoom operation unit 423, panel-side shutter operation unit 424 and touch panel switch 425 etc., and generates operation signals according to each switch operation and provides them to the controller 28. A panel open/closed detector 13 detects whether the panel display 40 is open or closed, generates a detection signal indicating the detection results, and supplies these results to the controller 28.

The controller 28 constructed using a microcomputer etc. generates a control signal CS based on operations signals from the body-side operation unit 12 and panel-side operation unit 42 and a detection signal from the panel open/closed detector 13. The generated control signal CS is supplied to the image pickup lens section 21, image pickup section 22, signal processor 23, recording/playback section 24 and output switcher 26 and controls each operation in such a manner that operations are carried out according to operation of the body-side operation unit 12 and the panel-side operation unit 42. Further, when the controller 28 is determined by a detection signal from the panel open/closed detector 13 that the panel display 40 is closed, it takes an operation signal from the panel-side operation unit 42 to be invalid. In this manner, by making the operation signal from the panel-side operation unit 42 invalid when the panel display 40 is closed, a zoom operation and shutter operation are prevented from being carried out even when the panel-side zoom operation unit 423 etc. come into contact with other portions so as to cause erroneous operation.

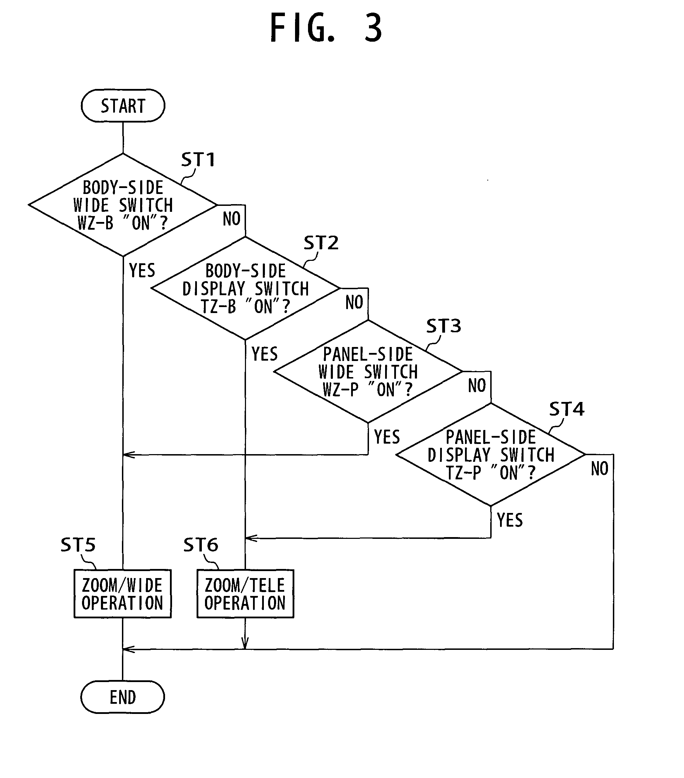

FIG. 3 is a flowchart showing a zoom operation at times when it is possible to use the body-side zoom operation unit 123 and the panel-side zoom operation unit 423 respectively.

In step ST1, the controller 28 determines whether or not a wide switch WZ-B of the body-side zoom operation unit 123 has been turned on. When the wide switch WZ-B is operated so as to go on, the process proceeds to step ST5, but when the wide switch WZ-B is not on, the process proceeds to step ST2.

In step ST2, the controller 28 determines whether or not a tele switch TZ-B of the body-side zoom operation unit 123 has been turned on. When the tele switch TZ-B is operated so as to go on, the process proceeds to step ST6, but when the tele switch TZ-B is not on, the process proceeds to step ST3.

In step ST3, the controller 28 determines whether or not the wide switch WZ-P of the panel-side zoom operation unit 423 has been turned on. When the wide switch WZ-P is operated so as to go on, the process proceeds to step ST5, but when the wide switch WZ-P is not on, the process proceeds to step ST4.

In step ST4, the controller 28 determines whether or not tele switch TZ-P of the panel-side zoom operation unit 423 has been turned on. When the tele switch TZ-P is operated so as to go on, the process proceeds to step ST6, but when the wide switch TZ-P is not on, the zoom operation is complete.

In step ST5, the controller 28 carries out a zoom wide operation so as to broaden an angle of view of the image being taken, by driving the image pickup lens section 21 using the lens driver 27 so as to reduce magnification without changing the position of subject imagery, and completes the zoom operation. In step ST6, the controller 28 carries out a zoom tele operation so as to increase subject size of an image being taken, by driving the image pickup lens section 21 using the lens driver 27 so as to increase magnification without changing the position of subject imagery, and completes the zoom operation.

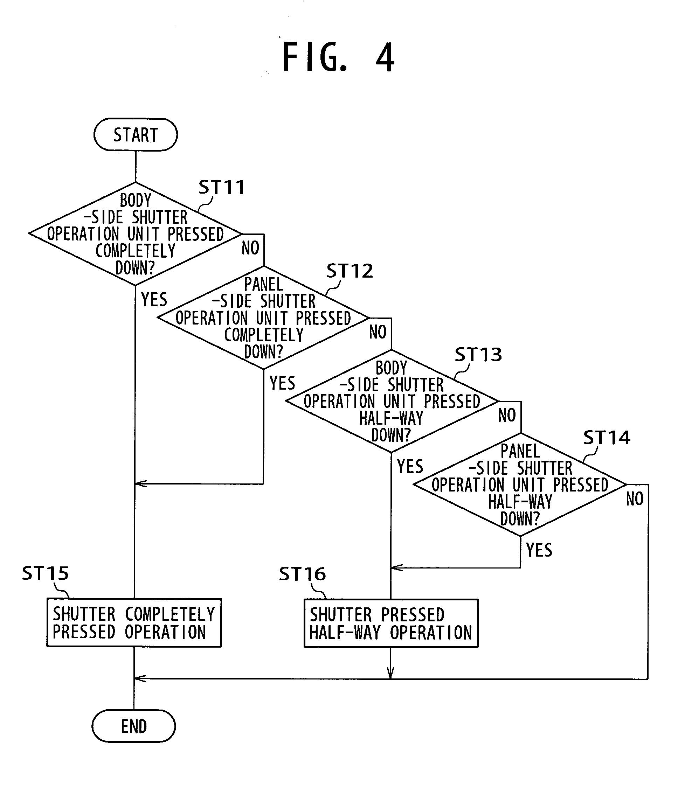

Next, a description is given using the flowchart of FIG. 4 of a still image pickup operation at times where it is taken to be possible to use the body-side shutter operation unit 124 and the panel-side shutter operation unit 424 respectively.

In step ST11, the controller 28 determines whether or not the body-side shutter operation unit 124 has been pressed all the way down. When the body-side shutter operation unit 124 has been pressed all the way down, the process proceeds to step ST15, and when the body-side shutter operation unit 124 has not been pressed all the way down, the process proceeds to step ST12.

In step ST13, the controller 28 determines whether or not the panel-side shutter operation unit 424 has been pressed all the way down. When the panel-side shutter operation unit 424 has been pressed all the way down, the process proceeds to step ST15, and when the panel-side shutter operation unit 424 has not been pressed all the way down, the process proceeds to step ST13.

In step ST13, the controller 28 determines whether or not the body-side shutter operation unit 124 has been pressed down half-way. When the body-side shutter operation unit 124 has been pressed half-way down, the process proceeds to step ST16, and when the body-side shutter operation unit 124 has not been pressed half-way down, the process proceeds to step ST14.

In step ST14, the controller 28 determines whether or not the panel-side shutter operation unit 424 has been pressed half-way down. When the panel-side shutter operation unit 424 has been pressed half-way down, the process proceeds to step ST16, and when the panel-side shutter operation unit 424 has not been pressed half-way down, the process is complete.

When the process proceeds to step ST15 from step ST11 or step ST12, the controller 28 controls the recording/playback section 24 in such a manner that just one image display of an image signal at a timing of pressing the body-side shutter operation unit 124 or the panel-side shutter operation unit 424 all the way down is recorded on the recording medium 25, and the process is complete. Further, when the process proceeds to step ST16 from step ST13 or step ST14, the controller 28 controls the image pickup lens section 21 and the lens driver 27 etc. in such a manner that focus and exposure etc. is automatically adjusted when the body-side shutter operation unit 124 or the panel-side shutter operation unit 424 are pressed down half-way, and the process is complete.

In the zoom operation of the embodiment described above, the image pickup lens section 21 is driven by the lens driver 27 but, for example, an image signal may be processed so that a subject is shown as being large, which is a so-called electronic zoom.

In this situation, a zoom operation unit and shutter operation unit are provided not only on the main body, but also on the side of the panel display unit. This means that even in cases where, for example, the wide switch WZ-B or the tele switch TZ-B of the body-side zoom operation unit 123 or the body-side shutter operation unit 124 cannot be easily operated by the fingers of the hand holding the image pickup apparatus 10, it is possible to perform zoom operations and record still images in a straightforward manner by operating the wide switch WZ-P or tele switch TZ-P of the panel-side zoom operation unit 423 provided at the panel display 40 or by operating the panel-side shutter operation unit 424 using the other hand.

As shown in the above, the image pickup apparatus of embodiments of the present invention may be applied to improving operativity during zoom operations and taking of still images.

It should be understood by those skilled in the art that various modifications, combinations, subcombinations and alterations may occur depending on design requirements and other factors insofar as they are within the scope of the appended claims or the equivalents thereof.
Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An image pick up apparatus having a freely openable and closable panel display, comprising:
a first operation unit provided on a body side of the image pick up apparatus; and
a second operation unit provided at the panel display;
wherein the first operation unit and the second operation unit have an equivalent operation function.

2. The image pick up apparatus according to claim 1,
wherein the equivalent operation function is a zoom operation function.

3. The image pick up apparatus according to claim 1,
wherein the equivalent operation function is a shutter operation function at the time of taking a still image.

4. An image pick up method using an image pick up apparatus having a freely openable and closable panel display,
wherein the image pick up apparatus is operated with a first operation unit provided on a body side thereof and
a second operation unit provided at the panel display, both having an equivalent operation function.
